# EUROPÄISCHE PATENTSCHRIFT

(11) **EP 1 619 481 B1**
(45) Veröffentlichungstag und Bekanntmachung des Hinweises auf die Patenterteilung: **24.09.2008**
(21) Anmeldenummer: 05013527.6
(22) Anmeldetag: 23.06.2005
(51) Int. Cl.: G01F 1/82

(54) **Vorrichtung zur Durchsatzmessung eines Massenstromes**
Device for measuring the throughput of a massflow
Dispositif pour la mesure de débit d'un écoulement massique

(30) Priorität: 08.07.2004 DE 102004033007
(43) Veröffentlichungstag der Anmeldung: 25.01.2006
(73) Patentinhaber: Friedrich, Claus, 35457 Lollar (DE)
(72) Erfinder: Friedrich, Claus, 35457 Lollar (DE)
(74) Vertreter: Knefel, Cordula

(56) Entgegenhaltungen:
- DE-B3- 10 253 078
- DE-U1- 20 115 010
- US-A- 3 331 244

## Beschreibung

Die Erfindung betrifft eine Vorrichtung zur Durchsatzmessung eines Massenstromes.

Die erfindungsgemäße Vorrichtung betrifft die Durchsatzmessung eines Massenstromes, beispielsweise eines Schüttgutstromes bestehend aus Getreidekörnern nach dem Coriolis-Messprinzip. Das Messelement bildet ein Flügelrad, das mit konstanter Drehzahl angetrieben wird. Dieses Flügelrad wird axial von einem Schüttgutstrom beaufschlagt. Über eine Leitvorrichtung wird das Schüttgut radial den Leitschaufeln zugeführt und von diesen auf eine konstante Umfangsgeschwindigkeit beschleunigt. Das hierfür erforderliche Drehmoment ist genau proportional zum gewichtsmäßigen Durchsatz. Bezüglich des Messprinzips wird auf das deutsche Patent DE 33 46 145 A1 und die europäische Patentanmeldung EP 0 146 902 A2 verwiesen und die Offenbarung dieser Schutzrechte zum Gegenstand der vorliegenden Anmeldung gemacht.

Die auszuwertende Messgröße dieses Wiegesystems ist die exakte Drehmomenterfassung. Eine Leistungsmessung am Motor, wie sie gemäß dem Stand der Technik bekannt ist, ist zu ungenau. Eine Drehmomentmessung direkt an der Antriebswelle des Flügelrades ist sehr aufwändig, daher wird gemäß dem Stand der Technik der Motor pendelnd gelagert und das Reaktionsmoment über eine Wägezelle erfasst. Diese Drehmomentmessung ist sehr genau, problematisch ist hierbei allerdings die Erfassung von sehr niedrigen Drehmomenten bei kleinen Durchsatzleistungen bedingt durch das relativ hohe Gewicht des Motors und die auftretende Lagerreibung.

Diese Problematik wird gemäß dem Stand der Technik dadurch verbessert, dass das Flügelrad selbst pendelnd gelagert und über ein Federelement angetrieben wird. Hierdurch kommt es zu einem Winkelversatz von der Antriebswelle zum Flügelrad in Abhängigkeit vom erforderlichen Drehmoment und damit zur Durchsatzleistung. Dieser Winkelversatz wird bei jeder Umdrehung durch zwei Näherungsschalter zeitlich erfasst. Der zeitliche Abstand zwischen der starren Antriebswelle und dem über eine Feder angetriebenen Flügelrad entspricht dem erforderlichen Drehmoment und somit dem Massendurchsatz.

Dieses Messsystem ist in dem deutschen Gebrauchsmuster Nr. 201 15 010.7 beschrieben. Die Problematik bei dieser Anordnung liegt jedoch in der notwendigen Lagerung des Flügelrades im Staubbereich und in der reibungslosen Abdichtung dieser Lagerung.

Zum Stand der Technik (US-A 3,331,244) gehört eine Vorrichtung zum Messen eines Massenstromes von körnigem Schüttgut. Diese zum Stand der Technik gehörende Vorrichtung ist relativ aufwändig aufgebaut und wegen der Anordnung im Staubbereich wartungsaufwändig.

Weiterhin gehört zum Stand der Technik (DE 102 53 078 B3) eine Messvorrichtung zur Ermittlung der Durchsatzmenge eines Massenstromes. Diese zum Stand der Technik gehörende Vorrichtung hat den Nachteil, dass sie sehr aufwändig aufgebaut ist.

Zum Stand der Technik (US-A-2,832,218 US, US-A-5,728,951) gehören Vorrichtungen zur Messung eines Massenstromes nach dem Coriolis-Prinzip. Diese Vorrichtungen weisen ein angetriebenes Flügelrad auf, auf das der Materialstrom aufgegeben, umgelenkt und beschleunigt wird, wobei das Drehmoment des Flügelrades gemessen wird.

Das der Erfindung zugrunde liegende technische Problem besteht darin, eine Vorrichtung zur Messung eines Massenstromes anzugeben, die die genannten Nachteile nicht aufweist.

Dieses technische Problem wird durch eine Vorrichtung mit den Merkmalen gemäß Anspruch 1 gelöst.

Von diesem Stand der Technik ausgehend wird das Problem dadurch gelöst, dass das Flügelrad über einen Torsionsfederstab pendelnd aufgehängt und gleichzeitig angetrieben wird, wobei der Torsionsfederstab innerhalb einer Hohlwelle angeordnet ist und wobei eine als die Hohlwelle ausgebildete Antriebswelle das Flügelrad von oben über den Torsionsfederstab antreibend ausgebildet ist. Hierdurch ist eine reibungslose Lagerung des Flügelrades möglich ohne Beeinflussung durch Staub oder Schmutz. Es sind lediglich zwei Gleitlagerbüchsen zwischen dem Torsionsstab und der Antriebsachse, die als Hohlwelle ausgebildet ist, zur horizontalen Führung des Flügelrades erforderlich. Diese Gleitlager, die nur den Winkelversatz aufnehmen müssen, erzeugen keine fehlerhafte Reibung, da durch die gleichzeitige Rotation von Hohlachse und Torsionsfederstab eine eventuell auftretende Hysterese des Winkelversatzes vermieden wird.

In der zum Messsystem gehörenden Auswerteelektronik wird der Winkelversatz zwischen der Antriebswelle und dem Flügelrad vorteilhaft durch Messung der Impulsabstandszeit erfasst. Dieser Winkelversatz ist proportional zum jeweiligen Massendurchsatz in kg/h.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
- Fig. 1: eine erfindungsgemäße Vorrichtung mit zwei Sensoren im Längsschnitt;
- Fig. 2: eine erfindungsgemäße Vorrichtung mit einem Sensor im Längsschnitt;
- Fig. 3: eine Draufsicht in Richtung des Pfeiles III der Fig. 2.

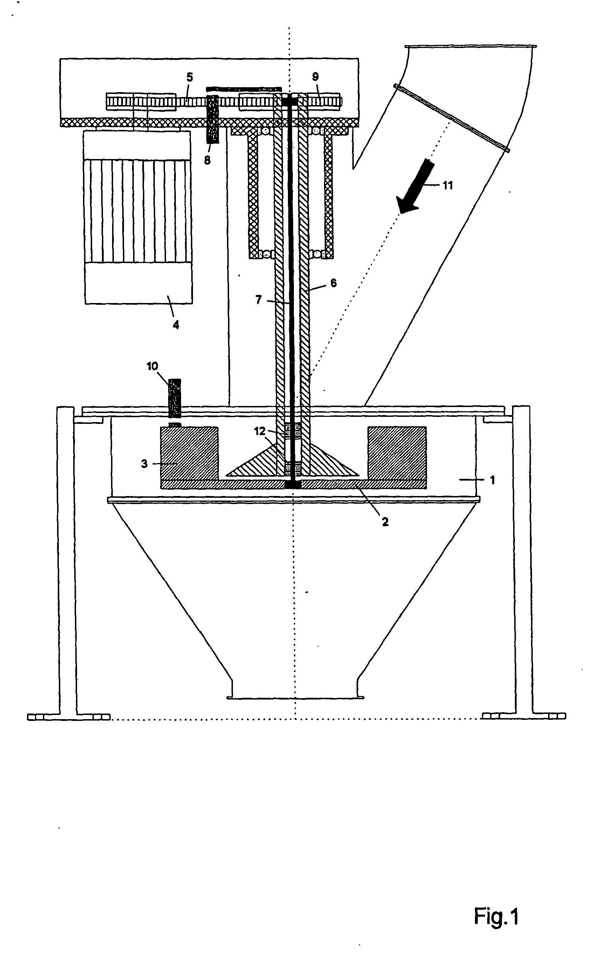

In Fig. 1 ist in einem runden Gehäuse (1) ein Flügelrad (2) mit Leitschaufeln (3) vertikal angeordnet. Das Flügelrad (2) wird von einem Elektromotor (4) über einen Riemenantrieb (5) und über eine Antriebswelle (6) mit konstanter Drehzahl angetrieben. Das Flügelrad (2) ist an einem Torsionsfederstab (7) pendelnd aufgehängt. Die Antriebswelle (6) ist als Hohlwelle ausgebildet und treibt von oben über den Torsionsfederstab (7) das Flügelrad (2) an.

Der Massenstrom (11) wird zentral dem Flügelrad (2) zugeführt und radial durch die Leitschaufeln (3) beschleunigt. In Abhängigkeit vom Massendurchsatz und der Steifigkeit des Torsionsfederstabes (7) wird das Flügelrad (2) gegenüber der Antriebswelle (6) um einen definierten Winkel verschoben. Diese Winkelverschiebung wird durch zwei Sensoren (8, 10) bei jeder Umdrehung berührungslos erfasst. Der erste Sensor (8) befindet sich im Bereich eines Antriebsrades (9), der zweite Sensor (10) ist über dem Flügelrad (2) angeordnet. Diese beiden Sensoren (8, 10) werden so eingestellt, dass bei jeder Umdrehung zunächst der erste Sensor (8) eine Impulsflanke und kurz darauf der zweite Sensor (10) eine weitere Impulsflanke liefert. Diese Impulsflanken werden durch eine genaue Zeitmessung erfasst und ausgewertet.

Das axial verdrehbare Flügelrad (2) wird in zwei Gleitlagern (12) horizontal geführt. Diese Lager (12) nehmen nur den Winkelversatz auf und unterliegen dadurch praktisch keinem Verschleiß. Durch die Rotation der Hohlwelle (6) verursachen diese Gleitlager keine Hysterese, die das Messergebnis verfälschen könnte.

Neu an der Erfindung ist, dass das Flügelrad (2) über den Torsionsfederstab (7) aufgehängt ist. Über die Verdrehung des Flügelrades (2) zu der Hohlwelle (6) und den Versatz des Flügelrades (2) zu der Hohlwelle (6) wird der Durchsatz gemessen. Das Flügelrad (2) wird langsamer, wenn das Schüttgut, beispielsweise das Getreide (11) auf das Flügelrad (2) trifft, so dass eine Torsion auftritt.

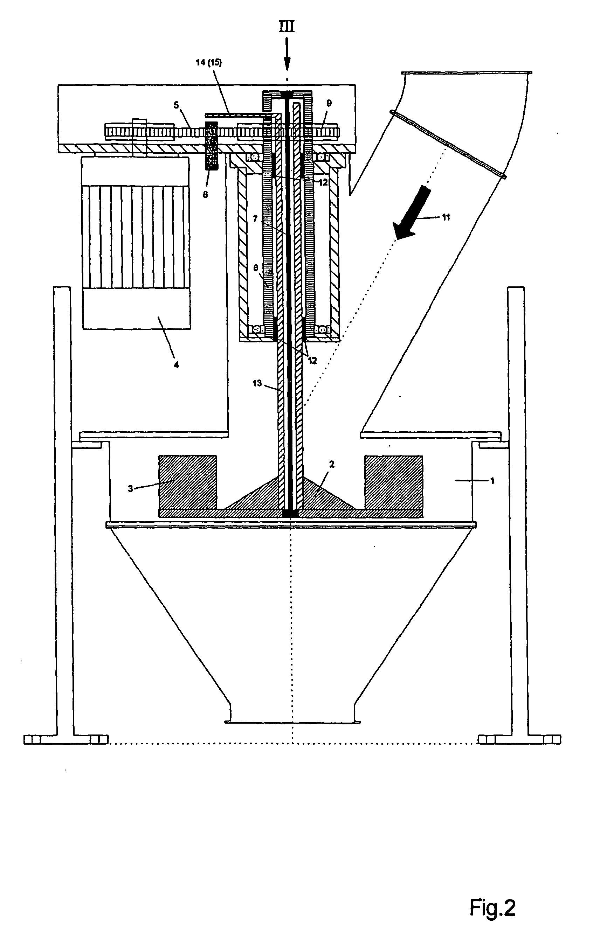

In Fig. 2 ist ein weiteres Ausführungbeispiel gezeigt, mit dem es möglich ist, die Impulsabstände mit nur einem Sensor (8) am Antriebsrad (9) zu erfassen. Durch das Einfügen einer zweiten Hohlwelle (13), die in der ersten Hohlwelle (6) frei drehbar angeordnet ist, wird der Verdrehungswinkel des an der zweiten Hohlwelle (13) kraftschlüssig angeordneten, von dem Torsionsfederstab (7) angetriebenen Flügelrades (2) durch das Antriebsrad (9) nach oben geführt und dort auf der gleichen Höhe wie der Winkel des Antriebsrades (9) von nur einem Sensor (8) erfasst.

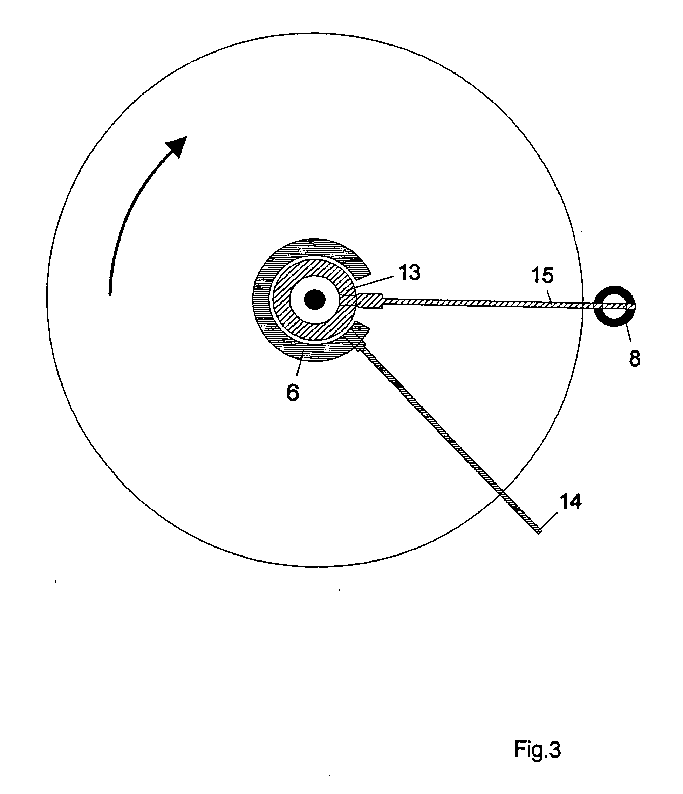

Diese Erfassung des Drehwinkels ist in Fig. 3 dargestellt. Vom Motor (4) wird die äußere Hohlwelle (6) angetrieben und schaltet über den horizontalen Stab (14) den Sensor (8). Abhängig vom jeweiligen Verdrehwinkel wird über den horizontalen Stab (15) der Sensor (8) einige Millisekunden später geschaltet. Aus dieser Impulsabstandszeit wird die Durchsatzleistung von der Auswertelektronik errechnet.

Diese Ausführung hat den Vorteil, dass Messfehler durch unterschiedliche Temperaturabhängigkeiten und sonstige Einflüsse auf den Schaltabstand von zwei Sensoren vermieden werden. Ein weiterer wesentlicher Vorteil der erfindungsgemäßen Vorrichtung ist die Impulsmessung außerhalb der Staub- und Verschmutzungszone.

### Bezugszahlen

- 1: Gehäuse
- 2: Flügelrad
- 3: Leitschaufeln
- 4: Elektromotor
- 5: Riemenantrieb
- 6: Antriebswelle
- 7: Torsionsfederstab
- 8: Sensor
- 9: Antriebsrad
- 10: Sensor
- 11: Massenstrom
- 12: Gleitlager
- 13: Hohlwelle
- 14: Stab an Hohlwelle (6)
- 15: Stab an Hohlwelle (13)

## Patentansprüche

1. Vorrichtung zur Messung eines Massenstromes nach dem Coriolis-Prinzip, die ein mit konstanter Drehzahl angetriebenes Flügelrad aufweist, auf das der Materialstrom aufgegeben, umgelenkt und beschleunigt wird, wobei das Drehmoment des Flügelrades gemessen wird,
**dadurch gekennzeichnet, dass** das Flügelrad (2) an einem Torsionsfederstab (7) pendelnd aufgehängt ist, der innerhalb einer Hohlwelle (6) angeordnet ist, dass eine als die Hohlwelle (6) ausgebildete Antriebswelle das Flügelrad (2) von oben über den Torsionsfederstab (7) antreibend ausgebildet ist, und dass wenigstens ein Sensor (8, 10) zur Messung des Winkelversatzes zwischen der antreibenden Hohlwelle (6) und dem Flügelrad (2) vorgesehen ist.

2. Vorrichtung nach Anspruch 1, **dadurch gekennzeichnet, dass** lediglich ein Sensor (8) für die Erfassung des Drehwinkels einer zweiten Hohlwelle (13) und für die Erfassung des Drehwinkels der ersten Hohlwelle (6) vorgesehen ist, dass die erste Hohlwelle (6) als eine von einem Antrieb (9) angetriebene Hohlwelle (6) ausgebildet ist, dass das Flügelrad (2) als ein über diesen Torsionsfederstab (7) angetriebenes Flügelrad (2) ausgebildet ist, und dass das Flügelrad (2) mit der zweiten Hohlwelle (13) kraftschlüssig verbunden ist.

3. Vorrichtung nach Anspruch 2, **dadurch gekennzeichnet, dass** die zweite Hohlwelle (13) für die Übertragung des Winkelversatzes des Flügelrades (2) als eine durch das Antriebsrad (9) geführte Hohlwelle (13) ausgebildet ist.

4. Vorrichtung nach Anspruch 1, **dadurch gekennzeichnet, dass** der erste Sensor (8) im Bereich eines Antriebsrades (9) der Hohlwelle (6) angeordnet ist, und dass der zweite Sensor (10) im Bereich des Flügelrades (2) angeordnet ist.

5. Vorrichtung nach Anspruch 2 oder 3, **dadurch gekennzeichnet, dass** ein an der ersten Hohlwelle (6) angeordneter Stab (14) und ein an der zweiten Hohlwelle (13) angeordneter Stab (15) ausgebildet ist, und dass die Stäbe (14, 15) als den Sensor (8) auslösende Stäbe ausgebildet sind.

## Claims

1. A device for measuring a mass flow according to the Coriolis principle, having an impeller which is driven at a constant speed and onto which the material stream is fed, deflected and accelerated, wherein the torque of the impeller is measured, **characterised in that** the impeller (2) is suspended in a pendulum fashion on a torsion spring bar (7) arranged within a hollow shaft (6), **in that** a drive shaft in the form of the hollow shaft (6) is designed to drive the impeller (2) from above via the torsion spring bar (7), and **in that** at least one sensor (8, 10) for measuring the angular offset between the driving hollow shaft (6) and the impeller (2) is provided.

2. A device according to claim 1, **characterised in that** only one sensor (8) for determining the angle of rotation of a second hollow shaft (13) and for determining the angle of rotation of the first hollow shaft (6) is provided, **in that** the first hollow shaft (6) is in the form of a hollow shaft (6) driven by a drive (9), **in that** the impeller (2) is in the form of an impeller (2) driven via this torsion spring bar (7), and **in that** the impeller (2) is connected to the second hollow shaft (13) in a non-positive locking manner.

3. A device according to claim 2, **characterised in that** the second hollow shaft (13) for the transfer of the angular offset of the impeller (2) is in the form of a hollow shaft (13) passed through the drive wheel (9).

4. A device according to claim 1, **characterised in that** the first sensor (8) is arranged in the region of a drive wheel (9) of the hollow shaft (6), and **in that** the second sensor (10) is arranged in the region of the impeller (2).

5. A device according to claim 2 or 3, **characterised in that** a bar (14) is arranged on the first hollow shaft (6) and a bar (15) is arranged on the second hollow shaft (13), and **in that** the bars (14, 15) are in the form of bars actuating the sensor (8).

## Revendications

1. Dispositif pour la mesure d'un écoulement massique en utilisant le principe de Coriolis, présentant une roue à ailettes entraînée avec une vitesse de rotation constante, sur laquelle l'écoulement de matières est alimenté, dévié et accéléré et dans lequel le moment de rotation de la roue à ailettes est mesuré, **caractérisé en ce que** la roue à ailettes (2) est suspendue de façon oscillante au moyen d'une barre élastique de torsion (7) disposée à l'intérieur d'un arbre creux (6), **en ce qu'**un arbre d'entraînement réalisé sous forme de l'arbre creux (6) est réalisé afin d'entraîner la roue à ailettes (2) depuis le haut via la barre élastique de torsion (7) et **en ce qu'**au moins un capteur (8, 10) est prévu pour mesurer le décalage angulaire entre l'arbre creux d'entraînement (6) et la roue à ailettes (2).

2. Dispositif selon la revendication 1, **caractérisé en ce qu'**il n'est prévu qu'un capteur (8) pour saisir l'angle de rotation d'un deuxième arbre creux (13) ainsi que pour saisir l'angle de rotation du premier arbre creux (6), et **en ce que** le premier arbre creux (6) est réalisé sous forme d'un arbre creux (6) entraîné au moyen d'un mécanisme d'entraînement (9), **en ce que** la roue à ailettes (2) est réalisée sous forme d'une roue à ailettes (2) entraînée au moyen de cette barre élastique de torsion (7), et **en ce que** la roue à ailettes (2) est reliée au moyen d'une liaison de force avec le deuxième arbre creux (13).

3. Dispositif selon la revendication 2, **caractérisé en ce que** le deuxième arbre creux (13), afin de transmettre le décalage angulaire de la roue à ailettes (2) est réalisé sous forme d'un arbre creux (13) guidé à travers la roue d'entraînement (9).

4. Dispositif selon la revendication 1, **caractérisé en ce que** le premier capteur (8) est disposé dans la zone d'une roue d'entraînement (9) de l'arbre creux (6) et **en ce que** le deuxième capteur (10) est disposé dans la zone de la roue à ailettes (2).

5. Dispositif selon la revendication 2 ou 3, **caractérisé en ce qu'**une tige (14) agencée sur le premier arbre creux (6) et une tige (15) agencée sur le deuxième arbre creux (13) sont prévues et **en ce que** les tiges (14, 15) sont agencées sous forme de tige pour le déclenchement du capteur (8).
